**Europäisches Patentamt**

**European Patent Office**

**Office européen des brevets**

(19)

(11) Veröffentlichungsnummer: **0 057 399**
A1

(12)

# EUROPÄISCHE PATENTANMELDUNG

(21) Anmeldenummer: **82100486.8**

(22) Anmeldetag: **25.01.82**

(51) Int. Cl.³: **C 01 B 33/20**, C 09 C 1/34

(30) Priorität: **04.02.81 DE 3103818**

(43) Veröffentlichungstag der Anmeldung: **11.08.82**
**Patentblatt 82/32**

(84) Benannte Vertragsstaaten: **DE FR GB IT NL**

(71) Anmelder: **BAYER AG, Zentralbereich Patente, Marken und Lizenzen, D-5090 Leverkusen 1, Bayerwerk (DE)**

(72) Erfinder: **Köhler, Peter, Dr., Oderstrasse 55, D-4150 Krefeld 11 (DE)**
Erfinder: **Pflugmacher, Ingo, Dr., Asternstrasse 16, D-4005 Meerbusch 3 (DE)**
Erfinder: **Endres, Robert, Dr., Hahnenweg 1, D-5000 Köln 80 (DE)**

(54) **Verfahren zur Herstellung Cr-haltiger Klinopyroxen-Phasen und deren Verwendung.**

(57) Die vorliegende Erfindung betrifft die Herstellung weitgehend phasenreiner Alkalichromsilikate der Zusammensetzung $Me^I Cr^{III} (Si_2O_6)$ mit $Me^I = Li$, Na sowie deren Verwendung.

EP 0 057 399 A1

ACTORUM AG

BAYER AKTIENGESELLSCHAFT        5090 Leverkusen, Bayerwerk

Zentralbereich
Patente, Marken und Lizenzen    St-by-c

Verfahren zur Herstellung Cr-haltiger Klinopyroxen-
Phasen und deren Verwendung

Die vorliegende Erfindung betrifft die Herstellung von Alkalichromsilikaten der Zusammensetzung $Me^I Cr^{III} (Si_2O_6)$ mit $Me^I$ = Na (Kosmochlor), $Me^I$ = Li ($\alpha$-Spodumen) sowie die der Mischphasen $Na_{1-x}Li_x Cr^{III} (Si_2O_6)$ mit x = 0 bis 0,25 (Kosmochlor-Struktur) und x = 0,6 bis 1,0 ($\alpha$-Spodumen-Struktur), sowie deren Verwendung.

Die Verbindung $NaCrSi_2O_6$ wurde erstmals 1897 von Laspeyres (Z. für Krist. 27, 592) in einem Toluca-Meteoriten als smaragdgrünes Mineral isoliert und wegen seiner Herkunft und grünen Farbe als "Kosmochlor" bezeichnet.

Die Verbindung $LiCrSi_2O_6$ kristallisiert im $\alpha$-Spodumengitter und wurde erstmals 1969 von J. Clark synthetisiert. (Pyroxenes and Amphilodes special paper No. 2, 31-50, Min.So.Am.).

Die Alkalichromsilikate der Zusammensetzung $Me\,Cr(Si_2O_6)$

Le A 20 855 - Europa

(Me = Li, Na) gehören zur Reihe der Klinopyroxene. Auch Mischkristalle des Systems $Li_xNa_{1-x}Cr^{III}(Si_2O_6)$ für x = 0-0,25 (Kosmochlorstruktur) und x = 0,6-1 ($\alpha$-Spodumen-Struktur) sind seit Hummel und Auh bekannt (Mat.Res.Bull., Vol. 5, 1970, S. 301-306). Sowohl die reinen als auch die Mischphasen sind smaragdgrün und zeichnen sich durch hohe Brillanz aus.

Die US-Patentschrift 3.692.735 beschreibt die Synthese obengenannter $Cr^{III}$-Silikate aus feingemahlenen trockenen oxidischen Ausgangsverbindungen wie $Li_2CO_3$, $Na_2CO_3$, $Cr_2O_3$-liefernden Verbindungen und $SiO_2$ durch Glühen bei Temperaturen zwischen 800 und 1500°C.

Die erhaltenen Pigmente besitzen jedoch einen schmutziggrünen Farbton, der hauptsächlich vom noch anwesenden $\alpha$-$Cr_2O_3$ herrührt. Auch weist das so erhaltene $NaCr(Si_2O_6)$ noch einen Chromatgehalt von ca. 1 % auf.

In verschiedenen sowjetischen Patentschriften (USSR 412 144, 427 605, 472 959 und 676 551) wird die Synthese von $NaCrSi_2O_6$ durch Glühung von $SiO_2$ und verschiedenen Cr-Komponenten (Cr-III-Verbindungen, Na-dichromat) bei Temperaturen von 1020 bis 1100°C beschrieben, wobei jedoch auch neben der Na-Verbindung noch andere silikatische Phasen erhalten werden.

Ein Weg zur Herstellung der reinen Na-Verbindung wird in der DOS 2 904 828 beschrieben, wobei aus einer

Le A 20 855

homogenen Trockenmischung von Na-dichromat und $SiO_2$ durch mindestens zweimalige Glühung zwischen 850 und 1050°C mit jeweiliger Zwischenmahlung ein phasenreines und chromatfreies ( < 0,1 % $CrO_4^{2-}$ ) Produkt erhalten wird.

Alle genannten Verfahren gehen offensichtlich davon aus, daß zur Herstellung Trockenmischungen notwendig sind.

Die Aufgabe der vorliegenden Erfindung ist es, ein Verfahren zur Verfügung zu stellen, welches die genannten Nachteile der bekannten Verfahren nicht aufweist. Dieses Verfahren soll die Herstellung phasenreiner, brillanter, chromatfreier Alkalimetall-Chromsilikate ermöglichen bei einfacher und wirtschaftlicher Verfahrensweise.

Überraschenderweise wurde nun gefunden, daß man phasenreine Alkalimetall-Chromsilikate der Zusammensetzung $Na_{1-x}Li_xCr^{III}(Si_2O_6)$ mit x = 0-0,25 und x = 0,6-1 erhalten kann, wenn man nahezu stöchiometrische Mengen wasserlöslicher oder feindisperser Chrom-Verbindungen, Alkali- und $SiO_2$-enthaltende Verbindungen, gegebenenfalls in Gegenwart von Reduktionsmitteln, unter Zusatz von Wasser intensiv mischt, bei Temperaturen bis 1250°C glüht und in an sich bekannter Weise aufarbeitet.

Zur Herstellung dieser Cr-III-Silikate sollten die Ausgangsstoffe so gewählt werden, daß bei der Reaktion keine zusätzlichen festen Produkte entstehen können.

Le A 20 855

Als Alkalikomponente können alle Verbindungen eingesetzt werden, die außer $Li_2O$ und/oder $Na_2O$ nur noch flüchtige oder oxidierbare Bestandteile enthalten.

Als $SiO_2$-Quellen sind bevorzugt feinteilige Kieselsäuren, wie man sie durch Mahlen, Fällung oder Flammenhydrolyse erhält, Na-Wasserglas (27 % $SiO_2$-Gehalt), Kieselsole und/oder Gele mit einem Gehalt von 30-50 % $SiO_2$ geeignet.

Es ist überraschend, daß lediglich über eine Suspendierung der Ausgangsstoffe in wäßriger Phase eine relativ kurze Glühzeit in glatter Reaktion ausschließlich zu den gewünschten Klinopyroxenen führt. Es kann angenommen werden, daß während dieser Suspendierung schon eine Vorreaktion stattfindet, die die Bildung des Klinopyroxens erleichtert. Es sollte die Suspension allerdings einen hohen Feststoffgehalt (ca. 40-60 %) erreichen, um den Energieaufwand bei der Trocknung gering zu halten.

Die Trocknung der jeweiligen Naßmischung kann in den üblichen Trocknungsaggregaten wie z.B. Walzentrocknern, Doppelschnecken oder Sprühtrocknern erfolgen, wobei keine Entmischung der Komponenten während des Trocknungsprozesses erfolgen darf. Ein Zusatz von Bindemitteln wie Methylcellulose, Stärke oder von Polyolen während der Naßmischung in Mengen von 1-2 Gew.-% (bezogen auf Fest-

Le A 20 855

stoffgehalt) erhöht die Stabilität des Bruchgranulates nach der Trocknung erheblich, so daß die Staubemission bei der Glühung nur noch gering ist. Hochwertige Produkte werden auch noch bei einem Unterschuß bis zu 5 Gew.-% der Chromkomponenten erhalten. Ein Überschuß sollte vermieden werden, da dabei eine unerwünschte $Cr_2O_3$-Bildung erfolgen kann.

Besonders gute Ergebnisse werden erreicht, wenn die Glühung bei Temperaturen zwischen 1000 und 1150°C vorgenommen wird.

Zur Synthese des Alkalichromsilikates $LiCr(Si_2O_6)$ ist es besonders vorteilhaft, Naßmischungen von $CrO_3$, Kieselsäure und $Li_2CO_3$ oder LiOH auf eine Restfeuchte von 5-20 % zu trocknen und bei Temperaturen von 1100 ± 25°C eine halbe bis 6 Stunden zu glühen. Anschließend wird das Produkt vorzerkleinert, naßgemahlen, filtriert, gewaschen und getrocknet.

Dabei werden stöchiometrische Mengen $CrO_3$, $Li_2CO_3$ oder LiOH sowie feinteilige Kieselsäure (BET-Oberflächen von 100 bis 700 $m^2$/g) als homogene Naßmischung vorgelegt (ca. 40-60 % Feststoffgehalt), in geeigneter Weise bis auf eine Restfeuchte von 0 bis 20 % getrocknet und das anfallende Bruchgranulat unter Produktbewegung in einem direkt oder indirekt beheizbaren Drehtrommelofen bei 1050 bis 1150°C, vorzugsweise 1075-1125°C zwischen 0,5 und 6 Stunden geglüht.

Le A 20 855

Die Naßmischung kann auch ohne Vortrocknung direkt in den Drehtrommelofen eingebracht werden, wobei zu beachten ist, daß die Ofentemperaturen zu Beginn nicht oberhalb 500°C liegen.

Eine andere Möglichkeit der Umsetzung besteht darin, daß nach Trocknung der Naßmischung diese zu einem feinteiligen Pulver zerkleinert wird und ohne Produktbewegung bei Temperaturen von vorzugsweise 1075 bis 1125°C zwischen 0,5 und 6 Stunden geglüht wird.

Die Li-Verbindung läßt sich auch phasenrein herstellen, wenn eine wäßrige $CrO_3$-Lösung mit Reduktionsmitteln wie Hydrazin, Methanol oder Ethanol reduziert, das ausgefällte, sehr reaktive $Cr(OH)_3$ mit den entsprechenden Mengen LiOH oder $Li_2CO_3$ sowie feinteiliger Kieselsäure intensiv vermischt wird und die Naßmischung (ca. 30-50 % Feststoffanteil) nach der Trocknung entweder als Bruchgranulat unter Produktbewegung oder nach Zerkleinerung der getrockneten Naßmischung ohne Produktbewegung bei Temperaturen von vorzugsweise 1075 bis 1125°C geglüht wird.

Die Mischphasen $Li_xNa_{1-x}Cr^{III}(Si_2O_6)$ mit $x = 0,1$ bis $0,25$ und $x = 0,6$ bis $1$ lassen sich phasenrein

Le A 20 855

und chromatfrei durch eine einmalige Glühung herstellen, wenn Naßmischungen von Cr-Verbindungen wie $CrO_3$, $Cr_2O_3$, $Cr(OH)_3$, Na-dichromat oder $NH_4$-dichromat, $Li_2CO_3$ bzw. LiOH, NaOH bzw. $Na_2CO_3$ und feinteilige Kieselsäure (ca. 40 - 60 % Feststoffanteil) wie bereits beschrieben im Fall für x = 0,1 bis 0,25 bei Temperaturen von 1025 bis 1075°C und für x = 0,6 bis 1 bei Temperaturen von 1075 bis 1125 jeweils 2 bis 12 Stunden geglüht werden.

Zur Herstellung des Alkalichromsilikates $NaCr(Si_2O_6)$ wird besonders bevorzugt eine wäßrige $CrO_3$-Lösung mit Methanol oder Ethanol reduziert, die organischen Nebenprodukte abdestilliert, das gebildete $Cr(OH)_3$ mit Na-Wasserglas und feinteiliger Kieselsäure intensiv vermischt, die Naßmischung bis auf eine Restfeuchte von 5 bis 20 % vorgetrocknet und bei Temperaturen von 1025 bis 1050°C 2-12 Stunden geglüht sowie in bekannter Weise gemahlen, filtriert und getrocknet.

Die jeweils erhaltenen Glühprodukte werden vorzerkleinert, in Wasser suspendiert, filtriert und gewaschen. Die Bestimmung der Chromatgehalte ergibt, daß nach der Glühung weniger als 0,15 % $CrO_4^{2-}$ in den Produkten enthalten ist (siehe Tabelle 1). Nach der Naßmahlung und Trocknung sind die Produkte praktisch chromatfrei (<1 ppm).

Le A 20 855

- 8 -

Je nach Verwendungszweck erfolgt eine unterschiedlich intensive Naßmahlung in Sandmühlen. Bei Mahlzeiten von weniger als einer Stunde wurden grobteilige Produkte mit BET-Oberflächen kleiner 5 $m^2$/g erhalten; eine 1 bis 3-stündige Mahldauer führt zu Produkten mit BET-Oberflächen von mehr als 5 $m^2$/g (Tabelle 1).

Die Mahlsuspension wird über ein 40-µ-Sieb gegeben, filtriert und sprühgetrocknet.

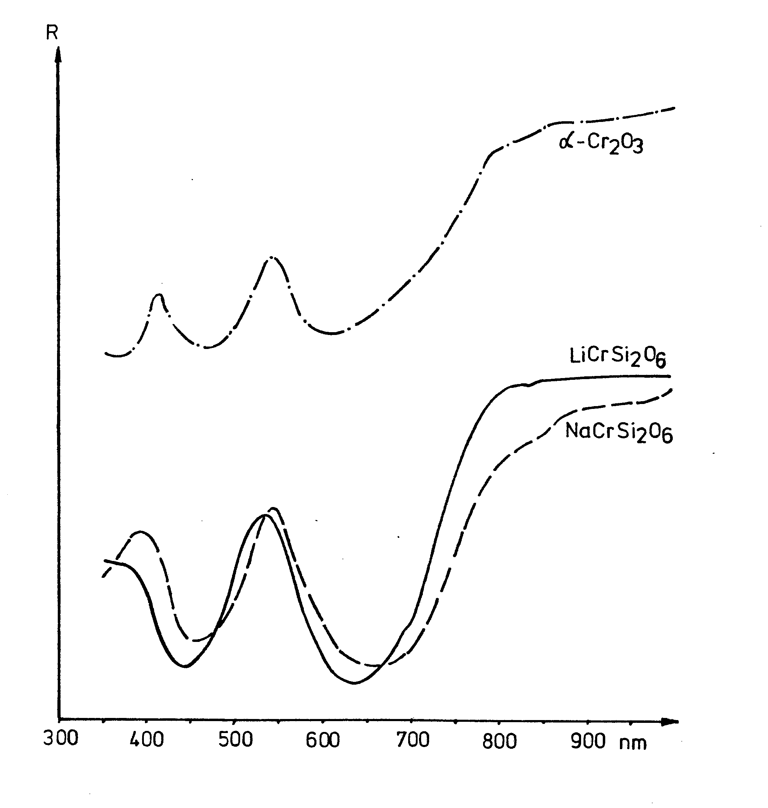

Im Gegensatz zu $\alpha$-$Cr_2O_3$ zeichnen sich die Cr-III-Silikate durch brillante, smaragdgrüne Farbtöne aus, wobei $NaCr(Si_2O_6)$ etwas gelbstichig und $LiCr(Si_2O_6)$ etwas blaustichig ist (siehe Abb. 1 mit Remissions-maxima bei $\lambda$ max = 540 bzw. 530 nm); die Farbtöne der Mischphasen $Li_xNa_{1-x}Cr(Si_2O_6)$ liegen dazwischen.

Zur Charakterisierung der Produkte wurden Röntgendiffraktogramme, Analysen und BET-Oberflächen angefertigt. Die entsprechenden Daten der Beispiele 1-10 sind Tabelle 1 zu entnehmen.

Die grobteiligeren Produkte mit BET-Oberflächen < 5 $m^2$/g eignen sich bevorzugt als Farbkörper zur Einfärbung von Emails, insbesondere in Abmischung mit anderen anorganischen Buntpigmenten, während die feinteiligeren Produkte (BET-Oberflächen größer 5 $m^2$/g) als brillante Grünpigmente alleine oder ebenfalls in Abmischungen mit anorganischen Buntpigmenten zur Einfärbung von Lacken und Kunststoffen Verwendung finden können.

Nachfolgend wird die Erfindung beispielhaft erläutert.

Le A 20 855

Vergleichsbeispiel A

Entsprechend Beispiel II der US-PS 3.692.735 wurden 3,32 g $Na_2CO_3$, 3,40 g $Cr_2O_3$ und 5,30 g $SiO_2$ getrennt in einer Laborkugelmühle so lange gemahlen, bis sie durch ein 100-Mesh-Sieb hindurchgingen. Die Mischung der Komponenten erfolgte in einem zylindrischen Gefäß mit Plastikkugeln auf einer Laborschüttelmaschine (10 min.). Das Gemisch wurde in ein Porzellanschiffchen gefüllt und an Luft 4 h bei 1000°C in einem elektrisch beheizten Muffelofen geglüht.

Das Calzinat wurde in einer Achatkugelmühle gemahlen, röntgenographisch untersucht sowie der wasserlösliche $CrO_4^{2-}$-Gehalt nach DIN 53 197, Verfahren A, bestimmt.

Aufgrund der Röntgenaufnahme (Diffraktogramm, CuK$\alpha_1$-Strahlung) lag ein Produktgemisch von $\sim$60 % $NaCrSi_2O_6$ und $\sim$ 40 % $\alpha$-$Cr_2O_3$ vor. Der $CrO_4^{2-}$-Gehalt betrug 0,99 %.

Das Produkt der 1. Glühung wurde nach der Mahlung nochmals 1 h bei 1000°C geglüht (Pt-Schale), gemahlen, röntgenographisch untersucht und der wasserlösliche Chromat(VI)-Anteil bestimmt. Der $NaCrSi_2O_6$-Gehalt hatte sich auf $\sim$ 94 % erhöht; der $Cr_2O_3$-Anteil reduzierte sich auf $\sim$ 6 %, während der $CrO_4^{2-}$-Gehalt nur noch 0,09 % betrug.

Die Qualitätsunterschiede der beiden Produkte sind am

Le A 20 855

besten zu erkennen, wenn die Farbkoordinaten miteinander verglichen werden (10 % PVK in Alkyldal F 48
- Handelsprodukt der Bayer AG).

Le A 20 855

| Probe | Rx | Ry | Rz | L* | a* | b* | C* | $H_{grd}$ |
|---|---|---|---|---|---|---|---|---|
| 1 Glühung (4 h, 1000°C) | 10,47 | 13,07 | 7,49 | 42,9 | −22,7 | 17,2 | 28,5 | 142,8 |
| $Cr_2O_3$ | 11,68 | 14,05 | 8,01 | 44,3 | −20,8 | 17,8 | 27,4 | 139,5 |
| 2 Glühungen (4 h, 1000°C/1 h 1000°C) | 12,01 | 16,89 | 8,93 | 48,1 | −34,0 | 21,2 | 40,1 | 148,1 |

Le A 20 855

0057399

- 12 -

Vergleichsbeispiel B

Analog zu Vergleichsbeispiel A wurden 1,76 g $Li_2CO_3$, 3,60 g $Cr_2O_3$ und 5,69 g $SiO_2$ zerkleinert, gemischt und 4 h bei 1200°C an der Luft ohne Produktbewegung geglüht (Beispiel I der US-PS 3.692.735).

Das Calcinat wurde in einer Achatkugelmühle gemahlen, röntgenographisch untersucht ($CuK_{\alpha 1}$-Strahlung) sowie der wasserlösliche $CrO_4^{2-}$-Gehalt nach DIN 53 197, Verfahren A, bestimmt.

Aufgrund der Röntgenaufnahme (Diffraktogramm) sind noch etwa 12 % $\alpha$-$Cr_2O_3$ enthalten, während die nach dem beanspruchten Verfahren hergestellten $LiCrSi_2O_6$-Produkte $Cr_2O_3$-frei sind.

Der Qualitätsunterschied wird besonders deutlich, wenn man die Farbkoordinaten des nachgearbeiteten Produktes mit einem eigenen Produkt vergleicht (10 % PVK in Alkydal F 48):

Le A 20 855

| Probe | Rx | Ry | Rz | L* | a* | b* | C* | $H_{grd}$ |
|---|---|---|---|---|---|---|---|---|
| Vergleichs-beispiel B | 11,41 | 15,25 | 8,86 | 46,0 | −28,3 | 17,7 | 33,4 | 148,0 |
| Produkt aus Beispiel 9 | 12,78 | 18,65 | 10,86 | 50,3 | −36,4 | 18,8 | 41,0 | 152,6 |

Die Chromgehalte liegen bei ca. 0,01 % $CrO_4^{2-}$ (Vergleichsbeispiel B) bzw. bei ca. 0,04 % $CrO_4^{2-}$ (Produkt aus Beispiel 9).

Beispiel 1

40,00 kg $Cr^{VI}O_3$ wurden in einem beheizbaren Kessel mit Rührer und Kühler in 150 l Wasser gelöst, mit 27,5 l Methanol innerhalb von 4 h unter Rühren reduziert und als $Cr(OH)_3$ ausgefällt. Es wurde noch 8 h bei ca. 80°C gerührt und anschließend die organischen Nebenprodukte abdestilliert.

155,00 kg Na-Wasserglas (Firma Henkel, 27 % $SiO_2$/8 % $Na_2O$), 7,50 kg Kieselsäure (Silcasil S[(R)]; Handelsprodukt der Bayer AG 87,3 % $SiO_2$) sowie 2,03 kg Stärke wurden langsam innerhalb von 4 h zugegeben und anschließend noch 14 h bei RT homogenisiert.

Die Suspension (∼30 % Feststoffgehalt) wurde auf einen Walzentrockner gepumpt, zu einem schuppigen Bruchgranulat (1-2 mm Dicke) mit ca. 20 % Restfeuchte vorgetrocknet und in einen direkt beheizbaren Drehtrommelofen gefüllt. Nach der Aufheizphase von 8 h wurde unter ständiger Drehbewegung 8 h bei 1035 ± 15°C geglüht.

Das Calcinat wurde nach dem Abkühlen in einer Mühle trocken vorzerkleinert, in Wasser 1 h suspendiert (∼30 % Feststoffanteil), filtriert und mit Wasser gewaschen. Der $CrO_4^{2-}$-Gehalt im Filtrat betrug 0,14 %, bezogen auf den Feststoff. Die Naßmahlung erfolgte in einer Sandmühle (30 min), die Trocknung in einem Sprühtrockner nach Abtrennung der Mahlkörper. Es

Le A 20 855

wurden 75,5 kg eines smaragdgrünen Produktes erhalten, das aufgrund der Röntgenanalyse phasenrein war und eine BET-Oberfläche von etwa 4,3 m²/g besaß.

Beispiel 2

Es wurde wie in Beispiel 1 präpariert und getrocknet (∿ 10 % Restfeuchte), das Granulat jedoch anschließend in einer Mühle zerkleinert und die feinteilige Mischung in einen Glühofen mit indirekter Beheizung gegeben. Nach dem Aufheizen wurde 8 h bei ca. 1030 ± 20°C ohne Produktbewegung geglüht. Das Produkt wurde direkt in Wasser suspendiert (1 h, ∿ 30 % Feststoffanteil), filtriert und gewaschen (ca. 0,06 % $CrO_4^{2-}$, bezogen auf Feststoff) sowie 60 min. in einer Sandmühle gemahlen und sprühgetrocknet.

Die Ausbeute betrug 80,4 kg. Das Produkt war aufgrund der Röntgenuntersuchung phasenrein und hatte eine BET-Oberfläche von 7,4 m²/g.

Beispiel 3

53,20 kg $CrO_3$ wurden in einem Rührbehälter in 150 l Wasser gelöst (RT) und langsam 1,97 kg $Li_2CO_3$ sowie 19,24 kg NaOH zugegeben. 73,59 kg Kieselsäure (Silcasil S$^{(R)}$ mit 87,3 % $SiO_2$ und 190 m²/g BET-Oberfläche) wurden innerhalb von 6 h portionsweise eingerührt, 2,1 kg Stärke zugefügt und 14 h gerührt. Die homogene Mischung (∿ 45 % Feststoffgehalt) wurde

Le A 20 855

auf einem Walzentrockner getrocknet (ca. 20 % Restfeuchte), das schuppige Bruchgranulat in einer Mühle zerkleinert und die feinteilige Mischung in einen indirekt beheizbaren Glühofen gefüllt. Die Glühung erfolgte bei 1045 $\pm$ 15°C ohne Produktbewegung (8 h Aufheizphase, 8 h Glühdauer).

Aufarbeitung und Mahlung wurden entsprechend Beispiel 2 durchgeführt.

Es wurden 110,5 kg eines phasenreinen, smaragdgrünen Produktes mit einer BET-Oberfläche von 5,6 m²/g erhalten.

Beispiel 4

55,78 kg $CrO_3$ wurden in 150 l Wasser in einem Rühr-behälter gelöst und langsam 15,52 kg $Li_2CO_3$ sowie 5,60 kg NaOH (als Feststoff) zugegeben. Innerhalb von 8 h wurden 77,15 kg Kieselsäure (Silcasil S[R] mit 87,3 % $SiO_2$, 190 m²/g BET-Oberfläche) und 2,15 kg Methylcellulose untergerührt sowie noch 14 h bei RT homogenisiert. Die Naßmischung ($\sim$ 45 % Feststoff-anteil) wurde entsprechend Beispiel 2 getrocknet, in einer Mühle zerkleinert und 6 h bei 1075 $\pm$ 15°C in einem indirekt beheizten Ofen ohne Produktbewegung geglüht.

Aufarbeitung und Mahlung erfolgten wie bei Beispiel 2.

Le A 20 855

Die Ausbeute betrug 115,6 kg. Das Produkt war phasenrein und hatte eine BET-Oberfläche von 4,2 m²/g.

Beispiel 5

Die Herstellung der Ansatzmischung erfolgte analog zu Beispiel 4. Nach der Trocknung auf dem Walzentrockner wurde das schuppige Bruchgranulat (Restfeuchte ~ 15 %) in einen direkt beheizbaren Drehtrommelofen gefüllt und nach der Aufheizphase (ca. 8 1/2 h) 6 h bei 1075 ± 15°C unter ständiger Drehbewegung geglüht. Das Glühprodukt wurde in einer Mühle vorzerkleinert, 1 h in Wasser suspendiert (~ 30 % Feststoffanteil), filtriert und gewaschen (~ 0,07 % $CrO_4^{2-}$, bezogen auf Feststoff).

Die Naßmahlung erfolgte in einer Sandmühle (60 min), die Trocknung in einem Sprühtrockner.

Als Ausbeute wurden 116,5 kg phasenreines Produkt mit 3,8 m²/g BET-Oberfläche erhalten.

Beispiel 6

50,43 kg $CrO_3$ (98,5 %ig) wurden in einem Rührbehälter in 170 l Wasser gelöst und vorsichtig 18,74 kg $Li_2CO_3$ als Feststoff protionsweise zugegeben. Danach wurden 69,15 kg Kieselsäure (Silcasil S[R], 87 % $SiO_2$) und 2,60 kg Stärke innerhalb von 6 h untergerührt sowie 15 h bei RT homogenisiert.

Le A 20 855

Die Naßmischung ($\sim$45 % Feststoffgehalt) wurde in einer beheizbaren Doppelschnecke zu einem Bruchgranulat mit ca. 15 % Restfeuchte getrocknet, in einer Mühle zerkleinert und in einem indirekt beheizbaren Ofen ohne Produktbewegung 4 h bei 1100 $\pm$ 15°C geglüht (ca. 8 h Aufheizphase).

Das Calcinat wurde 1 h in Wasser suspendiert ($\sim$30 % Feststoffanteil), filtriert und gewaschen (ca. 0,03 % $CrO_4^{2-}$ im Filtrat, bezogen auf den Feststoff). Die Naßmahlung erfolgte in einer Sandmühle (30 min); die Trocknung erfolgte in einem Sprühtrockner.

Es wurden 95,5 kg eines leuchtend smaragdgrünen phasenreinen Produktes erhalten, das eine BET-Oberfläche von 3,2 m²/g hatte.

Beispiel 7

23,69 kg $CrO_3$ wurden in 60 l Wasser bei 20°C in einem Rührbehälter gelöst und 5,84 kg LiOH (98 %ig als Feststoff) zugegeben. 32,85 kg Kieselsäure (Silcasil S$^{(R)}$ mit 87,5 % $SiO_2$) wurden portionsweise mit 1,2 kg Methylcellulose innerhalb von 4 h untergerührt und noch 14 h homogenisiert.

Die Trocknung der Naßmischung ($\sim$50 % Feststoffgehalt) erfolgte mit einem Walzentrockner zu einem schuppigen Bruchgranulat ($\sim$15 % Restfeuchte), das anschließend

Le A 20 855

in einer Mühle zerkleinert wurde. Die feinteilige Mischung wurde 12 h bei 1100 $\pm$ 15°C in einem indirekt beheizbaren Ofen ohne Produktbewegung geglüht und wie in Beispiel 6 beschrieben aufgearbeitet.

Als Ausbeute wurden 42,8 kg phasenreines Produkt mit einer BET-Oberfläche von 2,0 m²/g erhalten.

## Beispiel 8

23,68 kg $CrO_3$ wurden in einem beheizbaren Kessel mit Kühler in 80 l Wasser gelöst und mit 16,5 l Methanol unter Rühren innerhalb von 2 1/2 h reduziert und als $Cr(OH)_3$ ausgefällt. Es wurde noch 4 h bei ca. 80 % gerührt und anschließend die organischen Nebenprodukte abdestilliert. 98,29 kg eines Kieselsols mit 29,1 % $SiO_2$ wurden innerhalb von 2 h zugegeben und 8,80 kg $Li_2CO_3$ sowie 1,2 kg Stärke untergerührt.

Die Naßmischung (ca. 30 % Feststoffgehalt) wurde 14 h homogenisiert, mit einem Walzentrockner getrocknet ( $\sim$10 % Restfeuchte), das schuppige Bruchgranulat in einer Mühle zerkleinert und in einem indirekt beheizbaren Ofen ohne Produktbewegung 4 h bei 1100 $\mp$ 15°C geglüht.

Mahlung und Aufarbeitung erfolgten wie bei Beispiel 6; der Chromatgehalt ($CrO_4^{2-}$) lag bei ca. 0,03 %, bezogen auf den Feststoffanteil.

Le A 20 855

Es wurden 44,5 kg eines brillant grünen phasenreinen Produktes erhalten, dessen BET-Oberfläche bei 3,0 m²/g lag.

**Beispiel 9**

Ansatzpräparation und Trocknung erfolgten entsprechend Beispiel 6; jedoch wurde das Bruchgranulat (Restfeuchte $\sim$ 15 %) in einen direkt beheizbaren Drehtrommenofen gefüllt und nach der Aufheizphase (ca. 10 h) 6 h bei 1100 $\pm$ 15°C unter Produktgewegung geglüht. Aufarbeitung, Naßmahlung und Trocknung wurden entsprechend Beispiel 6 durchgeführt (ca. 0,04 % $CrO_4^{2-}$, bezogen auf Feststoffgehalt).

Als Ausbeute wurden 99,5 kg phasenreines, smaragdgrünes Produkt mit 4,2 m²/g BET-Oberfläche erhalten.

**Beispiel 10**

In einem Rührbehälter mit intensivem Rühraggregat wurden 125 l Wasser vorgelegt, 59,20 kg $CrO_3$ darin gelöst und 22,08 kg $Li_2CO_3$ als Feststoff portionsweise zugegeben. Anschließend wurden 1,55 kg Stärke (bezogen auf Feststoffgehalt) und 82,32 kg Kieselsäure (Silcasil[R] S mit 88 % $SiO_2$ und 190 m²/g BET-Oberfläche) innerhalb von 8 h portionsweise untergerührt.

Die Naßmischung ($\sim$ 54 % Feststoffgehalt) wurde 24 h

Le A 20 855

homogenisiert, auf einem Walzentrockner getrocknet (schuppiges Bruchgranulat mit ca. 10 % Restfeuchte), in einer Mühle zerkleinert und die feinteilige Mischung in einen indirekt beheizbaren Ofen gefüllt. Nach der Aufheizphase (ca. 8 h) wurde 6 h bei 1100 $\pm$ 20°C ohne Produktbewegung geglüht, das Calcinat 1 h in Wasser suspendiert (ca. 30 % Feststoffanteil), filtriert und gewaschen (ca. 0,02 % $CrO_4^{2-}$, bezogen auf Feststoffgehalt). Ein Teil des Produktes wurde 2 h, die andere Hälfte 3 h in einer Sandmühle gemahlen und sprühgetrocknet.

Insgesamt wurden 110,5 kg phasenreines Produkt mit BET-Oberflächen von 10 bzw. 12,8 m²/g erhalten.

Le A 20 855

Tabelle I

| Beispiele | Verbindung | % $Cr_2O_3$ | | % $SiO_2$ | |
|---|---|---|---|---|---|
| | | gef. | Theorie | gef. | Theorie |
| Vergleich A* | $NaCrSi_2O_6$ | − | − | − | − |
| Vergleich B* | $LiCrSi_2O_6$ | − | − | − | − |
| 1 | $NaCrSi_2O_6$ | 31,7 | 33,46 | 52,0 | 52,90 |
| 2 | $NaCrSi_2O_6$ | 32,0 | | 52,1 | |
| 3 | $Na_{0,9}Li_{0,1}CrSi_2O_6$ | 33,5 | 33,91 | 52,5 | 53,28 |
| 4 | $Na_{0,25}Li_{0,75}CrSi_2O_6$ | 34,3 | 35,55 | 55,1 | 55,86 |
| 5 | $Na_{0,25}Li_{0,75}CrSi_2O_6$ | 34,5 | | 55,2 | |
| 6 | $LiCrSi_2O_6$ | 35,4 | | 56,0 | |
| 7 | " | 35,5 | | 56,2 | |
| 8 | " | 35,2 | 36,20 | 56,1 | 56,92 |
| 9 | " | 35,0 | | 56,0 | |
| 10 | " | 35,8 | | 56,3 | |

* Nacharbeitung der Beispiele I, II der US-PS 3.692.735

## Tabelle I (Fortsetzung)

| | Chromatgehalt nach Glühung % $CrO_4^{2-}$ | Röntgenuntersuchung | Mahlung | spezifische Oberfläche (BET) m²/g |
|---|---|---|---|---|
| VA | 0,99 | 60 % $NaCrSi_2O_6$ / 40 % $Cr_2O_3$ | 15 min Sandmühle | – |
| VB | 0,01 | 88 % $LiCrSi_2O_6$ / 12 % $Cr_2O_3$ | 15 min Sandmühle | – |
| 1 | 0,14 | phasenreiner Kosmochlor (Indizierung nach Frondel u. Klein) | 30' Sandmühle | 4,3 |
| 2 | 0,06 | | 60' " | 7,4 |
| 3 | 0,07 | phasenreiner Kosmochlor | 60' " | 5,6 |
| 4 | 0,14 | phasenreiner $\alpha$-Spodumen | 60' " | 4,2 |
| 5 | 0,07 | | 60' " | 3,8 |
| 6 | 0,03 | | 30' " | 3,2 |
| 7 | 0,025 | phasenreiner $\alpha$-Spodumen (Indizierung nach ASTM-Karte 24-612) | 30' " | 2,0 |
| 8 | 0,03 | | 30' " | 3,0 |
| 9 | 0,04 | | 30' " | 4,2 |
| 10 | 0,02 | | 120' " | 10,0 |
| | | | 180' " | 12,8 |

## Patentansprüche

1. Verfahren zur Herstellung phasenreiner Alkalimetall-Chromsilikate der Zusammensetzung $Na_{1-x}Li_xCr^{III}$ $(Si_2O_6)$ mit x = 0-0,25 und x = 0,6 bis 1, dadurch gekennzeichnet, daß man nahezu stöchiometrische Mengen wasserlöslicher oder feindisperser Chrom-Verbindungen, Alkali- und $SiO_2$-enthaltende Verbindungen, gegebenenfalls in Gegenwart von Reduktionsmitteln, unter Zusatz von Wasser intensiv mischt, bei Temperaturen bis 1250°C glüht und in an sich bekannter Weise aufarbeitet.

2. Verfahren gemäß Anspruch 1, dadurch gekennzeichnet, daß die Chrom-Verbindungen Alkalidichromate, Ammoniumdichromat $CrO_3$, $Cr_2O_3$ und/oder $Cr(OH)_3$ sind.

3. Verfahren gemäß einem der Ansprüche 1 oder 2, dadurch gekennzeichnet, daß die Alkalikomponenten $Na_2CO_3$, NaOH, Na-Wasserglas sowie $Li_2CO_3$ und/oder LiOH, die $SiO_2$-Komponenten Na-Wasserglas, Kieselsäure und/oder Kieselsol sind.

4. Verfahren gemäß einem der Ansprüche 1 bis 3, dadurch gekennzeichnet, daß die Reduktionsmittel Alkohole, Aldehyde oder Hydrazin sind.

5. Verfahren gemäß einem der Ansprüche 1 bis 4, dadurch gekennzeichnet, daß man bei Temperaturen zwischen 1000 und 1150°C glüht.

Le A 20 855

6. Verfahren gemäß einem der Ansprüche 1 bis 5, dadurch gekennzeichnet, daß zur Synthese des Alkalichromsilikates $LiCr(Si_2O_6)$ Naßmischungen von $CrO_3$, Kieselsäure und $Li_2CO_3$ auf eine Restfeuchte von 5-20 % getrocknet und bei Temperaturen von 1100 ± 25°C 0,5 - 6 h geglüht, vorzerkleinert, naßgemahlen, filtriert, gewaschen und getrocknet werden.

7. Verfahren gemäß einem der Ansprüche 1 bis 6, dadurch gekennzeichnet, daß zur Synthese der Alkalichromsilikate $Li_xNa_{1-x}Cr(Si_2O_6)$ mit x = 0,6 bis 1, Naßmischungen von $Li_2CO_3$, NaOH, $CrO_3$ und Kieselsäure auf eine Restfeuchte von 5-20 % getrocknet, bei Temperaturen von 1075 bis 1125°C 2-10 h geglüht, vorzerkleinert, naß gemahlen, filtriert, gewaschen und getrocknet werden.

8. Verfahren nach einem der Ansprüche 1 bis 5, dadurch gekennzeichnet, daß zur Synthese der Alkalichromsilikate $Li_xNa_{1-x}Cr(Si_2O_6)$ mit x = 0,1 bis 0,25 Naßmischungen von $Li_2CO_3$, NaOH, $CrO_3$ und Kieselsäure auf eine Restfeuchte von 5-20 % getrocknet, bei Temperaturen von vorzugsweise 1025 bis 1075°C 2-12 h geglüht sowie die Calcinate vorzerkleinert, naß gemahlen, filtriert, gewaschen und getrocknet werden.

9. Verfahren gemäß einem der Ansprüche 1 bis 5, dadurch gekennzeichnet, daß zur Synthese des Alkalichromsilikates $NaCr(Si_2O_6)$ eine wäßrige $CrO_3$-Lösung

Le A 20 855

mit Methanol oder Ethanol reduziert wird, die organischen Nebenprodukte abdestilliert werden, das gebildete Cr(OH)$_3$ mit Na-Wasserglas und feinteiliger Kieselsäure intensiv gemischt, die Naßmischung bis auf eine Restfeuchte von 5 bis 20 % vorgetrocknet und bei Temperaturen von 1025 bis 1050°C 2-12 h geglüht sowie in bekannter Weise gemahlen, filtriert und getrocknet wird.

10. Verwendung der gemäß einem der Ansprüche 1-9 hergestellten chromatfreien und phasenreinen Alkali-Chromsilikate der Zusammensetzung Li$_x$Na$_{1-x}$Cr (Si$_2$O$_6$) mit x = 0 bis 0,25 und x = 0,6 bis 1,0 zur Einfärbung von Emails, Kunststoffen und Lacken.

Europäisches
Patentamt

**EUROPÄISCHER RECHERCHENBERICHT**

0057399
Nummer der Anmeldung

EP 82 10 0486.8

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| D,A | US - A - 3 692 735 (G.H. JOHNSON) <br> * Ansprüche 1 bis 10 * <br> -- | |
| D,A | DE - A1 - 2 904 828 (BAYER AG) <br> * Ansprüche 1 bis 6 * <br> -- | |
| A | Chemical Abstracts, Band 84, Nr. 12, <br> 22. März 1976 <br> Columbus, Ohio, USA <br> B.P. SEREDA et al. "Chromium-silicate pigment" <br> Seite 95, Spalte 2, Abstract Nr. 75830p | |
| D,A | & SU - A - 427 605 <br> -- | |
| A | Soviet Inventions Illustrated <br> Week C13, 7. Mai 1980, Sektion L02 | |
| D,A | & SU - A - 676 551 <br> -- | |
| A | Chemical Abstracts, Band 81, Nr. 20, <br> 18. November 1974 <br> Columbus, Ohio, USA <br> B.P. SEREDA et al. "Sodium-chromium silicate" <br> Seite 207, Spalte 2, Abstract Nr. 123807y | |
| D,A | & SU - A - 412 144 <br> ---- | |

**KLASSIFIKATION DER ANMELDUNG (Int. Cl.)**

C 01 B 33/20
C 09 C 1/34

**RECHERCHIERTE SACHGEBIETE (Int. Cl.)**

C 01 B 33/20
C 09 C 1/34

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 06-04-1982 | ASSOGNA |

EPA form 1503.1   06.78